# EUROPEAN PATENT SPECIFICATION

(11) **EP 4 251 696 B1**
(45) Date of publication and mention of the grant of the patent: **20.11.2024**
(21) Application number: 21819131.0
(22) Date of filing: 30.11.2021
(51) Int. Cl.: C08L 25/14, C08K 5/3435, C08K 5/3475, C08K 5/3492, C08F 212/08, C08F 220/14

(54) **UV RESISTANT SMMA COPOLYMERS WITH LOW HAZE AND HIGH CLARITY**
UV-RESISTENTE SMMA-COPOLYMERE MIT GERINGER TRÜBUNG UND HOHER KLARHEIT
COPOLYMÈRES DE S/MMA RÉSISTANTS AUX UV PRÉSENTANT UN FAIBLE VOILE ET UNE CLARTÉ ÉLEVÉE

(30) Priority: 30.11.2020 EP 20210539
(43) Date of publication of application: 04.10.2023
(73) Proprietor: INEOS Styrolution Group GmbH, 60325 Frankfurt am Main (DE)
(72) Inventor: ROWLETT, Jarrett R., Oswego, Illinois 60543 (US); COCHRAN, Thomas W., Wilmington, Illinois 60481 (US)
(74) Representative: Jacobi, Markus Alexander
(86) International application number: PCT/EP2021/083521
(87) International publication number: WO 2022/112590

(56) References cited:
- EP-A2- 1 038 912
- WO-A1-2021/198528
- KR-A- 20100 070 143
- KR-A- 20150 019 485
- US-A1- 2006 226 394

## Description

The present invention relates to thermoplastic molding compositions having low haze, high clarity and UV resistivity, a process for the preparation, shaped articles made therefrom and the use for various applications, in particular outdoor applications in the construction and automotive sector.

Clear transparent polymer materials are of considerable importance for many technical applications. It is desirable to make transparent packaging materials such as films (e.g. for food packaging) or plastics moldings (e.g. bottles, boxes, etc.), transparent parts of buildings (e.g. window panes, films, signboards), transparent parts of cars (e.g. panes, screens, exterior lamp cases), transparent parts of electronics (e.g. screen surfaces, cases, lamps), optical fibers or transparent parts of varnish, toys, sports equipment or medical and laboratory equipment. Particularly desirable are such polymers which are transparent in a wavelength range of from approximately 300 nm to approximately 800 nm, and remain stable even after being exposed to UV light.

Polymethyl methacrylate polymer (PMMA) bears the desired transparent properties. In particular, PMMA is transparent in the range from 300 nm to 800 nm, is stable towards UV light. However, the technical applicability of PMMA is limited by its low dimensional stability due to water absorption, which is associated with the high polarity of the polymer. Furthermore, said water absorption also leads to a change in the refractive index of the polymer, which is particularly undesired in optical applications requiring high precision and accuracy.

In contrast to PMMA, vinylaromatic polymers such as, e.g., polystyrene or polymers based on derivatives of styrene bear desirable properties regarding dimensional stability. Furthermore, such vinylaromatic polymers are non-polar, therefore having no issues with high humidity applications, especially with regard to refractive index changes.

WO 2015/118142 discloses styrene/methyl methacrylate (SMMA) copolymers comprising 20 to 50 wt.-% of methyl methacrylate and 50 to 80 wt.-% of styrene for producing UV-translucent products. Specific UV absorbers or light stabilizers are not mentioned.

However, the vinylaromatic moieties in the polymer absorb light in the range of the nearer UV light, in particular in the range of from 250 nm to 370 nm.

Therefore, the copolymers comprising typically used amounts of vinylaromatic moieties bear severely impaired transparency properties especially in this range. Furthermore, due to the absorption of UV light, vinylaromatic polymers can be partially damaged overtime, thus that the shaped articles prepared therefrom become hazy and discolored and lose transparency even for light in the spectral range outside of the absorbed range. These issues lead to limitations for the use of polymers derived from vinylaromatic monomers, especially in applications where the polymers are exposed to UV light.

These limitations can be at least partially overcome by the use of specific additives in the vinyl-aromatic polymer compositions, such as light stabilizers.

US 5,624,982 discloses non-yellowing styrenic polymers stabilized with a stabilizer system which comprises a benzotriazole UV absorber (e.g. Tinuvin^{®} 328), a hydroxyl-benbenzylisocyanurate primary antioxidant and a hindered amine light stabilizer (HALS). As HALS an oligomeric condensation product of N,N'(2,2,6,6-tetramethylpiper-idinyl)alkylene diamine and 6-amino-2,4-dichloro-1,3,5-s-triazine which triazine amine group is preferably derived from morpholine (e.g. Cyasorb^{®} 3346), or bis(2,2,6,6,-tetramethyl-4-piperidinyl) sebacate (e.g. Tinuvin^{®} 770), or bis(1,2,2,6,6,-pentamethyl-4-piperidinyl) ester of (3,5-di-tert-butyl-4-hydroxybenzyl)-butylmalonate (e.g. Tinuvin 144) is used. In a long list of suitable styrenic polymers SMMA copolymers are generally mentioned. In all examples a stabilized blend of SAN-copolymers with ASA- and AES- graft copolymers is used which additionally comprises TiO₂ (pigment, inorganic UV-absorber). One of the 50 Examples shows such a SAN-copolymer blend comprising a stabilizer system comprising 0.4 pbw Tinuvin 328, 0.4 pbw Tinuvin 144 and 0.4 pbw Cyasorb 3346.

The balance in yellowing performance and weatherability and the transparency of these (opaque) known blends are still in need of improvement.

WO 2006/057355 discloses resin compositions comprising 100 pbw of a SMMA- copolymer (MMA: 80 to 50 wt.-%), 0.1 to 2 pbw, of a HALS compound and 0.1 to 2 pbw of a benzotriazole compound. As HALS compound one or more derivatives of bis(1,2,2,6,6-pentamethyl-4-piperidiyl)- or bis(2,2,6,6-tetramethyl-4-piperidiyl)dicarboxylic acid diee-sters may be used. In all examples one HALS compound (Tinuvin 770) and a UV-absorber (Tinuvin 329) are used in a 1:1 weight ratio.

KR 2010/0070143 discloses a styrene resin composition comprising 100 pbw of a methylmethacrylate styrene copolymer (styrene: 50 to 80 wt.-%), 0.05 to 1.0 pbw of a HALS stabilizer, and 0.05 to 1.0 pbw of a benzotriazole UV absorber (all examples: Tinuvin 329, 0.2 pbw). The HALS absorber is of the bis(1,2,2,6,6-pentamethyl-4-piperi-diyl)- or bis(2,2,6,6-tetramethyl-4-piperidiyl)dicarboxylic acid dieester type (all examples: Tinuvin 770, 0.2 pbw).

JP 2006/154445 discloses a light diffusing plate which layer (B) consists of a resin composition consisting of a SMMA copolymer (MMA: 5 to 50 wt.-%), and further 0.1 to 1 pbw of an UV absorber and 0.1 to 1 pbw of a HALS stabilizer. The UV-absorber can be i.a. of a benzophenone type, cyano acrylate type, salicylic ester type, benzotriazole type, triazine type, and oxal anilide type.

The afore-mentioned resin compositions comprising SMMA copolymers and stabilizer systems according to the prior art often offer a good indoor UV resistance but their outdoor UV resistance is not satisfying. A stronger UV resistance of said materials is needed in many demanding outdoor applications, in particular applications in the construction or automotive sector.

However, even the applicability of light stabilizing and UV-absorbing additives is limited due to potential solubility issues, since they may lead to haziness and discoloration of the polymer compositions, if introduced in higher amounts that may be required for the stabilization against UV-induced deterioration in outdoor applications.

There is a technical need to provide resin compositions comprising SMMA copolymers that have an increased outdoor UV stability and a good balance of UV-resistance, optical properties (less than 2% haze (ASTM D1003) before weathering) and color (preferably less than 1.5 unit of yellowness index increase - ASTM E 313 - after outdoor UV-stability testing (SAE 2527, total exposure 5000 kJ/m²)).

Surprisingly, it was found that a thermoplastic molding composition comprising a specific combination of light stabilizing additives in specific amounts and a specific copolymer of a vinylaromatic monomer and MMA bears such desired properties.

Therefore, one aspect of the present invention is a thermoplastic molding composition comprising (or consisting of) components (a) (b), (c) and optionally (d):
(a) 97 to 99.85 wt.-% of at least one copolymer (a) comprising (or consisting of) repeating units derived from a vinylaromatic monomer (a1) and methyl methacη-late (a2);
(b) 0.1 to 1.5 wt.-% of a hindered amine light stabilizer (HALS) combination (b) consisting of: (b1) at least one high molecular weight hindered amine light stabilizer (HMW-HALS) having a number average molecular weight (Mn) of ≥ (equal to or more than) 1800 g/mol, preferably ≥ 1900 g/mol; more preferably ≥ 2000 g/mol, and (b2) at least one low molecular weight hindered amine light stabilizer (LMW-HALS) having a number average molecular weight of ≤(equal to or less than) 800 g/mol;
(c) 0.05 to 1.0 wt.-%, preferably 0.05 to 0.5 wt.-%, more preferably 0.1 to 0.4 wt.-%, most preferred 0.1 to 0.3 wt.-%, in particular 0.2 to 0.3 wt.-%, of at least one organic UV absorber (c);
(d) optionally up to 0.5 wt.-%, preferably 0.15 to 0.30 wt.-% of at least one further additive (d) different from (b) and (c), provided that pigments and fillers are excluded; wherein

copolymer (a) comprises from 30 to 60 wt.-%, preferably 30 to 49 wt.-%, more preferably 35 to 48 wt.-%, most preferred 40 to 48 wt.-% - based on the total weight of (a) - of repeating units derived from methyl methacrylate (a2);
the weight ratio (b1):(b2) is 12:1 to 1:2, preferably 6:1 to 1.5:2, more preferably 4:1 to 1:1, in particular 3:1 to 1:1; and the weight ratio of (b):(c) is 5:1 to 1:5, preferably 4:1 to 4:3, more preferably 3:1 to 4:3.

If optional component (d) is present, its minimum amount is 0.01 wt.-%.

The number average molecular weight of HALS component (b1) and (b2) can be determined by common analytical methods such as NMR, Liquid chromatography-mass spectrometry (LC-MS), Gas chromatography-mass spectrometry (GC-MS) and gel permeation chromatography/size exclusion chromatography (GPC/SEC).

Thermoplastic molding compositions according to the invention and shaped articles thereof have a high outdoor UV stability (UV-resistance). In the context of the present invention, the outdoor UV stability testing is conducted according to SAE J2527 (issued 2004-02) through SAE J1960 at a radiant exposure of 5000 kJ/m² with Xenon irradiance (wavelength 340 nm) of 0.55 W/m² at 70 °C for light cycle and 38°C for dark cycle.

In the context of the present invention, the term "high outdoor UV stability" means that (i) after outdoor stability testing - as described hereinbefore -, the yellowness index according to ASTM method E313 (test specimens of 1/8 inch thickness) increases by less than 1.5 (measured from the CIE color space values using a D65 light source (observation angle 10°) according to ASTM E1348:2015) and that (ii) before weathering the haze (measured according to ASTM D1003 using CIE illuminant C, test specimens of 1/8 inch thickness) is less than 2%, preferably less than 1%.

Preferred are thermoplastic molding compositions according to the invention comprising (or consisting of) components (a) (b), (c) and optionally (d) as follows:
(a) 97.80 to 99.85 wt.-%, preferably 98.30 to 99.45 wt.-%, more preferred 98.50 to 99.25 wt.-%;
(b) 0.1 to 1.2 wt.-%, preferably 0.3 to 1.0 wt.-%, more preferred 0.5 to 0.9 wt.-%;
(c) 0.05 to 0.5 wt.-%, preferably 0.1 to 0.4 wt.-%, more preferred 0.1 to 0.3 wt.-%;
(d) optionally up to 0.5 wt.-%, preferably 0.15 to 0.30 wt.-%.

Preferred are thermoplastic molding compositions as afore-mentioned wherein copolymer (a) comprises 30 to 49 wt.-%, preferably 35 to 48 wt.-%, more preferably 40 to 48 wt.-% - based on the total weight of (a) - of repeating units derived from methyl methacrylate (a2).

More preferred are thermoplastic molding compositions as afore-mentioned wherein copolymer (a) consists of 30 to 49 wt.-%, preferably 35 to 48 wt.-%, more preferably 40 to 48 wt.-% of repeating units derived from methyl methacrylate (a2), and 51 to 70 wt.-%, preferably 52 to 65 wt.-%, more preferably 52 to 60 wt.-% of repeating units derived from styrene.

Furthermore preferred are thermoplastic molding compositions as afore-mentioned wherein the weight ratio (b1):(b2) is 6:1 to 1.5:2, preferably 4:1 to 1:1, more preferably 3:1 to 1:1.

Furthermore preferred are thermoplastic molding compositions as afore-mentioned wherein the weight ratio of (b):(c) is 4:1 to 4:3, preferably 3:1 to 4:3.

Another aspect of the invention is a process for the preparation of a thermoplastic molding composition according to the invention. Another aspect of the invention is a process for the preparation of a shaped article comprising a thermoplastic molding composition according to the invention. A further aspect of the invention is a shaped article comprising a thermoplastic molding composition according to the invention. Furthermore, an aspect of the invention is the use of a thermoplastic molding composition according to the invention and of shaped articles comprising it for outdoor applications, in particular for applications in the construction and automotive sector.

### Copolymer (a)

The term "copolymer" as used herein for copolymer (a) (= component (a)) may be understood in the broadest sense as any polymer comprising two or more different types of monomers (i.e., (a1) at least one kind of vinylaromatic monomer and (a2) at least methyl methacrylate (MMA)) covalently connected with another. The terms indicating that the copolymer (a) comprises monomers or the polymer consists of monomers will be understood by those skilled in the art as meaning that the monomers in this context are monomeric moieties embedded into the copolymer strand.

In a preferred embodiment, the vinylaromatic monomer (a1) and methyl methacrylate (a2) in the copolymer (a) are not bound to rubber monomers such as butadiene moieties. In particular the vinylaromatic monomer (a1) is styrene.

Preferably, the melt flow index (MFI) (determined at a temperature of 200°C and at a load of 5 kg according to ASTM procedure D1238 - 20) of the copolymers (a) according to the present invention is less than 50 g/10 min, more preferably less than 20 g/10 min, even more preferably of less than 10 g/10 min, often less than 5 g/10 min.

In a copolymer (a), the different types of monomer moieties may be either evenly and homogeneously distributed over the copolymer (random copolymer) or may be located at a defined area of the polymer strand(s), i.e. in a block (block copolymer). As used herein, the term "block copolymer" may be understood in the broadest sense as any copolymer having a defined polymer structure. Preferably, the copolymer (a) is a random copolymer.

Optionally, the copolymer (a) according to the present invention may also contain one or more methacrylate derivatives other than MMA such as, e.g. ethyl methacrylate (EMA), butyl methacrylate (BMA) and 2-ethyl hexyl methacrylate (2-EHMA), and methacrylic acid.

Preferably, such methacrylate derivatives and methacrylic acid do constitute for not more than 25 wt.-% of the copolymer mass, more preferably not more than 10 wt.-% of the copolymer mass, often not more than 5 wt.-% of the copolymer mass. Particularly preferably, the copolymer (a) does not contain any further methacrylate derivative other than MMA or methacrylic acid.

Optionally, the copolymer (a) according to the present invention may also contain one or more cross-linking moiety/moieties such as, e.g., divinylbenzene, in its polymer strand. Preferably, such cross-linking agents do constitute for not more than 25 wt.-% of the copolymer mass, more preferably not more than 10 wt.-% of the copolymer mass, often not more than 5 wt.-% of the copolymer mass. Preferably, the copolymer (a) does not contain any cross-linking moieties.

The copolymer (a) according to the present invention may bear a linear, circular or branched structure. A circular structure is a copolymer strand wherein both ends are connected with another. As used herein, the term "branched structure" may be understood in the broadest sense any structure deviating from a plain linear or circular structure. Accordingly, in a polymer of branched structure, there is at least one monomer binding to three or more other monomer(s). Preferably, the copolymer (a) of the present invention is an essentially linear or circular copolymer, more preferably an essentially linear copolymer, in particular a linear random copolymer.

The thermoplastic molding composition according to the present invention is transparent or at least partly transparent. In particular, when the thermoplastic molding composition is once heated above the glass transition temperature Tg, subsequently molded and finally cooled below the glass transition temperature Tg, the obtained molding is transparent or at least partly transparent. The Tg-value of the thermoplastic molding composition can be determined by classical methods.

As used throughout the present invention, the term "transparent" may be understood in the broadest sense as ability of letting light pass through.

Preferably, transparency means, that, at a thickness of a sample of 1/8 inch (3.175 mm), at least 70 %, preferably of at least 80 %, more preferably of at least 85 %, even more preferably of at least 90 %, of light at a wavelength range of between 300 nm and 800 nm passes through.

Particularly preferably, transparency means that, in a sample of 0.5 mm, 1 mm, 3.175 mm, 5 mm or even 1 cm, at least 70 %, preferably at least 80 %, more preferably at least 85 %, even more preferably at least 90 % of light at a wavelength range of from 300 nm to 800 nm passes through.

Preferably the obtained thermoplastic molding composition is transparent when a shaped article obtained therefrom is more than 0.5 mm, preferably more than 1 mm, more preferably more than 2 mm, often from 3.175 mm to 10 mm thick. The light transmittance for light with a wavelength of from 300 to 800 nm, at a layer thickness of 3.175 mm preferably is higher than 85 %, often higher than 90 %., measured according to ASTM D1003 using CIE illuminant C.

As used herein, methyl methacrylate (MMA) (a2) is understood in the broadest sense. Herein, the terms "methyl methacrylate", "methyl methacrylate moiety", "methyl methacrylate monomer", "methyl methacrylate monomer moiety" and similar terms are understood interchangeably.

As used herein, a vinylaromatic monomer (a1) may be understood in the broadest sense as any as any moiety bearing at least one vinyl residue (-CH=CH₂) in its monomeric form and at least one monocyclic or polycyclic aromatic residue known in the art. The person skilled in the art will notice that upon polymerization, the double bond of the vinyl residue is cleaved and is, thereby, embedded into the polymeric strand. In accordance with international commonly designation standards, the monomeric moiety as well as the moiety embedded into the polymeric strand is designated as vinylaromatic monomer. Herein, the terms "vinylaromatic", "vinylaromatic moiety", "vinylaromatic monomer", "vinylaromatic monomer moiety", "aromatic vinyl", "aromatic vinyl moiety", "aromatic vinyl monomer", "aromatic vinyl monomer moiety" and similar terms may be understood interchangeably. Preferably, the vinylaromatic monomer bears one vinyl residue (-CH=CH₂) and one monocyclic or polycyclic aromatic residue.

More preferably, the vinylaromatic monomer bears one vinyl residue (-CH=CH₂) and one monocyclic aromatic residue, such as styrene.

In a preferred embodiment, the one or more vinylaromatic monomers (a1) comprise(s) styrene and/or one or more styrene derivative(s). As used herein, a styrene derivative may be any derivative of styrene known in the art such as, e.g. alkylated styrene (e.g., alpha-methylstyrene, alpha-ethylstyrene, 2-methylstyrene, 3-methylstyrene, 4-methylstyrene, 2-ethylstyrene, 3-ethylstyrene, 4-ethylstyrene, 2,3-dimethylstyrene, 2,4-dimethylstyrene, 2,5-dimethylstyrene, 2,6-dimethylstyrene,2,3-diethylstyrene, 2,4-diethylstyrene, 2,5-diethylstyrene, 2,6-diethylstyrene, 2-methyl-3-ethylstyrene,2-methyl-4-ethylstyrene, 2-methyl-5-ethylstyrene, 2-methyl-6-ethylstyrene, 3-methyl-2-ethylstyrene, 3-methyl-4-ethylstyrene, 3-methyl-5-ethylstyrene, 3-methyl-6-ethylstyrene,4-methyl-5-ethylstyrene, 4-methyl-6-ethylstyrene, 2-ethyl-3-methylstyrene, 2-ethyl-4-methylstyrene, 2-ethyl-5-methylstyrene, 2-ethyl-6-methylstyrene, 3-ethyl-4-methylstyrene, 3-ethyl-5-methylstyrene, 3-methyl-6-ethylstyrene, 4-ethyl-5-methyl-styrene, 4-ethyl-6-methylstyrene), halogenated styrene (e.g., e.g., 2-chloro-styrene, 3-chloro-styrene, 4-chloro-styrene, 2-fluoro-styrene, 3-fluoro-styrene, 4-fluoro-styrene, 2,3-di-chloro-styrene, 2,4-di-chloro-styrene, 2,5-di-chloro-styrene, 2,6-di-chloro-styrene,2,3-di-fluoro-styrene, 2,4-di-fluoro-styrene, 2,5-di-fluoro-styrene, 2,6-di-fluoro-styrene, 2-chloro-3-fluoro-styrene, 2-chloro-4-fluoro-styrene, 2-chloro-5-fluoro-styrene, 2-chloro-6-fluoro-styrene, 3-chloro-2-fluoro-styrene, 3-chloro-4-fluoro-styrene, 3-chloro-5-fluoro-styrene, 3-chloro-6-fluoro-styrene, 4-chloro-5-fluoro-styrene, 4-chloro-6-fluoro-styrene, 2-fluoro-3-chloro-styrene, 2-fluoro-4-chloro-styrene, 2-fluoro-5-chloro-styrene, 2-fluoro-6-chloro-styrene, 3-fluoro-4-chloro-styrene, 3-fluoro-5-chloro-styrene, 3-chloro-6-fluoro-styrene, 4-fluoro-5-chloro-styrene, 4-fluoro-6-chloro-styrene) or hydroxystyrene styrene (e.g., 2-hydroxystyrene, 3-hydroxystyrene, 4-hydroxystyrene, 2,3-dihydroxystyrene, 2,4-dihydroxystyrene, 2,5-dihydroxystyrene, 2,6-dihydroxystyrene).

Particularly preferably, the styrene derivative according to the present invention is alpha-methylstyrene or styrene.

In a preferred embodiment, the one or more vinylaromatic monomers (a1) comprise styrene. In an even more preferred embodiment, the one or more vinylaromatic monomers (a1) comprise at least 50 wt.-% styrene, preferably at least 70 wt.-% styrene, more preferably at least 80 wt.-% styrene, even more preferably at least 90 wt.-% styrene, based on the total weight of (a1). In a preferred embodiment, the only vinylaromatic monomer (a1) in said copolymer (a) is styrene.

As noted above, the copolymer (a) according to the present invention may be a random polymer or a block polymer. In a preferred embodiment, the copolymer is a random copolymer.

As used herein, a random polymer is a copolymer wherein the different types of monomer moieties (i.e., at least (a1) and (a2)) are essentially evenly and homogeneously distributed over the copolymer.

It is preferable that the copolymer (a) comprises 40 to 70 wt.-% of repeating units derived from vinylaromatic monomers (a1), in particular styrene, and 30 to 60 wt.-% of repeating units derived from methyl methacrylate (a2); even more preferable that it comprises 51 to 70 wt.-% of repeating units derived from vinylaromatic monomers (a1), in particular styrene, and 30 to 49 wt.-% of repeating units derived from methyl methacrylate (a2); even more preferable that it comprises 52 to 65 wt.-% of repeating units derived from vinylaromatic monomers (a1), in particular styrene, and 35 to 48 wt.-% of repeating units derived from methyl methacrylate (a2); even most preferred that it comprises 52 to 60 wt.-% of repeating units derived from vinylaromatic monomers (a1), in particular styrene, and 40 to 48 wt.-% of repeating units derived from methyl methacrylate (a2), based on the total weight of copolymer (a).

Preferably, the copolymer does not comprise any further monomer moieties than MMA and one or more, preferably one, vinylaromatic monomers, in particular styrene.

Thus, preferred copolymer (a) consists of repeating units derived from vinylaromatic monomers (a1), in particular styrene, and of repeating units derived from methyl methacrylate (a2) in the afore-mentioned amounts.

It is in particular preferred that copolymer (a) consists of 30 to 49 wt.-%, preferably 35 to 48 wt.-%, more preferably 40 to 48 wt.-% of repeating units derived from methyl methacrylate (a2), and 51 to 70 wt.-%, preferably 52 to 65 wt.-%, more preferably 52 to 60 wt.-% of repeating units derived from styrene.

In general, a copolymer (a) according to the present invention may be obtained by any means suitable therefore known in the art. The person skilled in the art knows numerous methods suitable for obtaining such copolymer (a). Well-known conventional polymerization procedures may be employed in the preparation of such copolymer (a) according to the present invention. Component (a) is e.g. obtained in a known manner by bulk, solution, suspension, precipitation or emulsion polymerization. Details of these processes are described, for example, in Kunststoffhandbuch, ed. R. Vieweg and G. Dau-miller, Vol. V "Polystyrol", Carl-Hanser-Verlag Munich, 1969, p. 118 ff.

Exemplarily, the copolymer (a) may be prepared by emulsion polymerization, solution polymerization or bulk polymerization. Preferably, heat or radical initiation may be used (including living polymerization methods).

Methyl methacrylate (MMA) monomers (a) as well as numerous vinylaromatic monomers are commercially available. Others can be easily obtained by standard chemical processes. As indicated above, a vinyl monomer is characterized by its vinyl group (-CH=CH₂) in its monomeric form. Therefore, vinyl monomers may also be obtained from precursor molecules. Exemplarily, precursor molecules bearing an ethyl residue (-CH₂-CH₃) may be oxidized/ dehydrated, halogenated precursor molecules bearing a haloge-nethyl residue (e.g., -CHCl-CH₃, -CH₂-CH₂Cl) may be dehalogenated by eliminating the respective acid (e.g., HCl) or hydroxylated precursor molecules bearing a hydroxyethyl residue (e.g., -CHOH-CH₃, -CH₂-CH₂OH) may be dehydrogenated by eliminating water (e.g., H₂O). Then, the respective vinyl monomers are obtainable.

Copolymerization for the preparation of copolymer (a) may optionally be carried out in the presence of, e.g., one or more solvent(s) and/or one or more initiator(s) (e.g., one or more radical starter(s)).

The initiation of copolymerization may e.g. be started by thermal decomposition of an initiator (e.g an organic peroxide (e.g., dicumyl peroxide) or an azo compound), photolysis (e.g., with metal iodides, metal alkyls or azo compounds (e.g., azoisobutylnitrile (AIBN))), a peroxide initiator (e.g., benzoyl peroxide), an initiator composition enabling a redox reaction (e.g., reduction of hydrogen peroxide or an alkyl hydrogen peroxide by means of iron ions or other reductants such as, e.g, Cr²⁺, V²⁺, Ti³⁺, Co²⁺ or Cu⁺), persulfate activation, ionizing radiation (e.g., by means of α-, β-, γ- or x-rays), electrochemical activation, plasma activation, sonication (e.g., at around 16 kHz) or a ternary Initiator (e.g., benzoyl peroxide-3,6-bis(o-carboxybenzoyl)-N-isopropylcarbazole-di-η5-indenyl-zicronium dichloride optionally in combination with a metallocene (e.g., indenylzirconium) and/or a peroxide (e.g., benzoyl peroxide).

In a preferred embodiment, the copolymerization comprises heating of the reaction mixture comprising the monomers above a temperature above 100°C and/or adding one or more polymerization initiator(s) to said reaction mixture.

The reaction mixture can be maintained or brought to conditions allowing chain elongation of the polymer. For instance, the temperature is set according to the monomer/copolymer content of the reaction mixture. Exemplarily, as indicated above, the temperature may optionally also be varied during incubation, such as, e.g., constantly or stepwise increased during the polymerization process. Exemplarily, methods for producing a copolymer (a) as used in the present invention may be conducted as shown in any of GB 464688, GB 531956, GB 863279 and WO 2003/051973.

### Hindered amine light stabilizer (HALS) combination (component b)

As component (b) a combination of hindered amine light stabilizers is used which consists of: (b1) at least one high molecular weight hindered amine light stabilizer (HMW-HALS) having a number average molecular weight (Mn) of ≥ (equal to or more than) 1800 g/mol, preferably ≥ 1900 g/mol; more preferably ≥ 2000 g/mol, and (b2) at least one low molecular weight hindered amine light stabilizer (LMW-HALS) having a number average molecular weight (Mn) of ≤ (equal to or less than) 800 g/mol.

The hindered amine light stabilizers used in the thermoplastic molding composition according to the invention are generally based on 2,2,6,6-tetramethyl-piperidine derivatives, in particular derivatives of 2,2,6,6-tetramethyl-4-piperidyl-substituted organic compounds.

LMW-HALS compounds (b2) are mostly composed of one or two repeating units of a 2,2,6,6-tetramethyl-piperidine derivative. HMW-HALS compounds (b1) mostly are (oligomeric) reaction products based on 2,2,6,6-tetramethyl-piperidine derivatives, often (oligomeric) reaction products based on 2,2,6,6-tetramethyl-piperidine derivatives and 1,3,5-triazine derivatives. The number average molecular weight (Mn) of the HMW-HALS (b1) often is in the range of 1800 to 15000 g/mol, preferably in the range of 1900 g/mol to 10000 g/mol; more preferably in the range of 2000 to 5000 g/mol.

Suitable compounds which may be used as HMW-HALS (b1) are one or more compounds selected from the group consisting of:
poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]) (MW: 2000-3200 g/mol, e.g. Chimassorb^{®} 944); 1,5,8,12-Tetrakis[4,6-bis(N-butyl-N-1,2,2,6,6-pentamethyl-4-piperidylamino)-1,3,5-triazin-2-yl]-1,5,8,12-tetraazadodecane (MW: ~ 2300 g/mol, e.g. Chimassorb 119); N,N'-Bis(2,2,6,6-tetramethyl-4-piperidinyl)-1,6-hexanediamine polymer with 2,4,6-trichloro-1,3,5-triazine reaction products with N-butyl-1-bu-tanamine and N-butyl-2,2,6,6-tetramethyl-4-piperidinamine (MW: 2600 - 3400 g/mol, CAS 192268-64-7, e.g. Chimassorb 2020); 4-Hydroxy-2,2,6,6-tetramethyl-1-piperi-dinethanol-dimethyl succinate copolymer (MW: 3100-4200 g/mol, e.g. Lowilite^{®} 62); Poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]] (MW: 2000 - 3300 g/mol, e.g. Lowilite 94); and 1,2,3,4-Butanetetracarboxylic acid, polymer with 2,2-bis(hydroxymethyl)-1,3-propanediol and 3-hydroxy-2,2-dimethylpropanal, 1,2,2,6,6-pentamethyl-4-piperidinyl ester (MW: ∼ 2000 g/mol, CAS 101357-36-2, e.g. Amfine^{®} LA-63).

Preferred as HMW-HALS (b1) are oligomeric reaction products of a 2,2,6,6-tetramethyl-4-piperidyl-substituted organic compound (includes its derivatives) and a 1,3,5-triazine derivative, such as in particular poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]).

Suitable compounds which may be used as LMW-HALS (b2) are one or more compounds selected from the group consisting of:
Bis(1-octyloxy-2,2,6,6-tetramethyl-4-piperidyl)sebacate (e.g. Tinuvin^{®} 123);
Bis(1,2,2,6,6-pentamethyl-4-piperidyl) [[3,5-bis(1,1-dimethylethyl)-4 hydroxyphenyl]methyl]butylmalonate (e.g. Tinuvin 144); Bis(2,2,6,6,-tetramethyl-4-piperidyl)sebacate (e.g. Tinuvin 770); Methyl 1,2,2,6,6-pentamethyl-4-piperidyl sebacate, Bis(1,2,2,6,6-pentamethyl-4-piperidinyl)-2-(4-methoxy- benzylidene)malonate; N,N'-bisformyl-N,N'-bis-(2,2,6,6-tetramethyl-4-piperidinyl)- hexamethylendiamine (e.g. Uvinul^{®} 4050);
Bis(1,2,2,6,6-pentamethyl-4-piperidinyl)-2-(4-methoxy-benzylidene)malonate (e.g. Hos-tavin^{®}); Bis(1,2,2,6,6-pentamethyl-4-piperidyl)sebacate (e.g. Afmine^{®} LA-72); 2,2,6,6-Tetramethyl-4-piperidinyl stearate (e.g. Cyasorb^{®} UV3853); 4-Piperidinol-2,2,6,6-tetramethyl-1-(undecyloxy)-4,4'-carbonate (e.g. Amfine^{®} LA-81); 2,2,6,6-Tetramethyl-4-pi-peridinol (e.g. Lastar^{®} A); 2,2,6,6-Tetramethyl-4-piperidinyl hexadecanoate; and
2,2,6,6-Tetramethyl-4-piperidinyl octadecanoate; and mixtures thereof, in particular a mixture of Bis(1,2,2,6,6-pentamethyl-4-piperidyl)sebacate and Methyl 1,2,2,6,6-pentamethyl-4-piperidyl sebacate (e.g. Tinuvin 292); a mixture of Bis(1,2,2,6,6-pentamethyl-4-piperidinyl)-2-(4-methoxy- benzylidene)malonate and Methyl 1,2,2,6,6-pentamethyl-4-piperidyl sebacate (e.g. Tinuvin 765); and a mixture of 2,2,6,6-Tetramethyl-4-piperidinyl hexadecanoate and 2,2,6,6-Tetramethyl-4-piperidinyl octadecanoate (e.g. Addworks^{®} ATR 945 mp).

Preferably the at least one LMW-HALS (b2) is a derivative of a bis(2,2,6,6-tetramethyl-4-piperidyl)dicarboxylic acid diester, in particular preferred is bis(2,2,6,6,-tetramethyl-4-piperidyl)sebacate.

In the thermoplastic molding compositions according to the invention the at least one, preferably one, HMW-HALS (b1) and the at least one, preferably one, LMW-HALS (b2) are generally used in a weight ratio (b1):(b2) of 12:1 to 1:2, preferably 6:1 to 1.5:2, more preferably 4:1 to 1:1, in particular 3:1 to 1:1.

### UV absorber (c)

As the at least one organic UV absorber (c) (= component (c)) one or more compounds may be used preferably selected from the group consisting of substituted benzotriazoles, substituted benzophenones, substituted triazines, oxalanilides, substituted resorcinols, salicylates and cyanoacrylates, more preferably from the group consisting of 2-(2-hydroxyphenyl) benzotriazoles, 2-hydroxy-benzophenones, hydroxyphenyl-s-triazines and oxalanilides. More preferably the at least one organic UV absorber (c) is a 2-(2-hydroxyphenyl) benzotriazole, in particular 2-(2H-benzotriazol-2-yl)-4-(1,1,3,3-tetramethylbutyl)phenol (e.g. Tinuvin^{®} 329, commercially available from BASF SE, Germany).

The weight ratio of component (b) to (c) generally is 5:1 to 1:5, preferably 4:1 to 4:3, more preferably 3:1 to 4:3. Component (b) includes HMW-HALS (b1) and LMW-HALS (b2) and thus the proportion given for (b) relates to the total weight of HMW-HALS (b1) and LMW-HALS (b2).

Preferred are thermoplastic molding compositions according to the invention comprising
as HMW-HALS (b1) an oligomeric reaction product of a 2,2,6,6-tetramethyl-4-piperidyl-substituted organic compound (including its derivatives) and a 1,3,5-triazine derivative, in particular poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]);
as LMW-HALS (b2) a bis(2,2,6,6-tetramethyl-4-piperidyl)dicarboxylic acid diester (including its derivatives), in particular bis(2,2,6,6-tetramethyl-4-piperidyl)sebacate; and
as UV absorber (c) a 2-(2-hydroxyphenyl) benzotriazole, a 2-hydroxy-benzophenone, a hydroxyphenyl-s-triazine or an oxalanilide, preferably a 2-(2-hydroxyphenyl) benzotriazole, more preferably 2-(2H-benzotriazol-2-yl)-4-(1,1,3,3-tetramethylbutyl)phenol.

More preferred are afore-mentioned preferred thermoplastic molding compositions according to the invention wherein HMW-HALS (b1) and LMW-HALS (b2) are used in a weight ratio (b1):(b2) of 6:1 to 1.5:2, preferably 4:1 to 1:1, more preferably 3:1 to 1:1.

### Additives (d)

Optionally the thermoplastic molding composition according to the invention may comprise up to 0.5 wt.-%, preferably 0.15 to 0.30 wt.-% of at least one further additive (d) (= component (d)) different from (b) and (c), provided that pigments and fillers are excluded.

Suitable additives (d) include all substances customarily employed for processing or finishing the polymers, except of pigments and fillers (see e.g. "Plastics Additives Handbook", Hans Zweifel, 6th edition, Hanser Publ., Munich, 2009).

Exemplarily, an additive may be a stabilizer for improving thermal stability, a stabilizer for enhancing hydrolysis resistance and chemical resistance, a process stabilizer, a radical scavenger, an antioxidant, an anti-thermal decomposition agent, a glossing agent, a metal deactivator, an antistatic agent, a flow agent, an anti-sticking agent, metal ions, a flame retardant, a dispersing agent, a dye, and/or a (external/internal) lubricant.

These additives may be admixed at any stage of the manufacturing operation, but preferably at an early stage in order to profit early on from the stabilizing effects (or other specific effects) of the added substance.

Preferably component (d) is at least one lubricant and/or at least one antioxidant.

Suitable lubricants (glidants/demolding agents) include stearic acids, stearyl alcohol, stearic esters, amide waxes (bisstearylamide, in particular ethylenebisstearamide (EBS)), polyolefin waxes and/or generally higher fatty acids, derivatives thereof and corresponding fatty acid mixtures comprising 12 to 30 carbon atoms.

Suitable antioxidants are, e.g. one or more compounds selected from monophosphite-based antioxidants, diphosphite-based antioxidants and sterically hindered phenolic antioxidants. If one or more antioxidants are present, they are preferably selected from monophosphite-based antioxidants, such as trisubstituted monophosphite derivatives, diphosphite-based antioxidants, such as substituted pentaerythrirol diphosphite derivatives and sterically hindered phenolic antioxidants, eg. 2,6-di-tertbutylphenolic derivatives.

More preferably, the antioxidant used as component (d) is one or more compounds selected from tri-phenyl substituted monophosphite derivatives, di-phenyl substituted pentaerythritol diphosphite derivatives and mono-substituted 2,6-di-tert-butylphenolic derivatives. In particularly preferred embodiments, the one or more antioxidants are one or more of tris(2,4-di-tert-butylphenyl)phosphite, bis(2,4-di-tert-butylphenyl)pentaerythritol diphosphite and octadecyl-3-[3,5-di-tert-butyl-4-hydroxyphenyl]propionate.

In preferred embodiments, the thermoplastic molding composition according to the invention consists of the components (a), (b), (c) and optionally (d).

As indicated above, a further aspect of the invention is a process for the preparation of a thermoplastic molding composition according to the invention by mixing copolymer (a) with HALS component (b), UV-stabilizer (c) and, if present, further additives (d). Component (b) consisting of LMW-HALS (b1) and HMW-HALS (b2) can be added to copolymer (a) by separate addition of LMW-HALS (b1) and HMW-HALS (b2), or by addition of a mixture of both. Preferably in the process according to the invention copolymer (a) is provided in a molten state and components (b), (c) and (d) are added to a melt of copolymer (a).

The mixing of the components can be performed by suitable means such as e.g. a mixer, a kneader or an extruder, preferably a twin screw extruder.

Preferably, if antioxidants are present as component (d), they are added to copolymer (a) separately from components (b), (c) and optional further additives used as component (d). More preferably components (b), (c) and optional further additives used as component (d) are introduced into the thermoplastic molding composition during secondary compounding, whereas antioxidants, if present, are introduced into the reactor during the polymerization of copolymer (a).

The thermoplastic molding composition according to the present invention may be used to produce a shaped article therefrom.

Thus, a further aspect of the invention is a process for the preparation of a shaped article comprising the thermoplastic molding composition according to the invention wherein the shaped article is formed by extrusion, injection molding, casting, blow molding, spraying, spinning, rolling or weaving, in particular extrusion or injection molding.

In this context, the person skilled in the art will know several means for producing one or more of such shaped articles from such molding compositions. Producing a shaped article may e.g. be performed by extrusion, injection molding, casting, blow molding, spraying, spinning, rolling, weaving, forming a suspension from an emulsion etc. or a combination of two or more thereof. The person skilled in the art will know which method(s) to apply for producing the respective shaped article.

The person skilled in the art will also notice that a shaped article in the sense of the present invention may be obtained from at least one thermoplastic molding composition according to the present invention, which molding composition may either be a melt or present as a raw material for molding processes (e.g. in the form of pellets, powder and/or blocks) or may be dissolved in a suitable solvent.

Accordingly, a further aspect of the present invention relates to a shaped article comprising (or consisting of) a thermoplastic molding composition according to the present invention.

Thermoplastic molding compositions according to the invention and shaped articles thereof are generally transparent or at least partly transparent. Thermoplastic molding compositions according to the invention and shaped articles thereof in particular have a high outdoor UV stability. As outlined above, the outdoor UV stability testing is conducted according to SAE J2527 (issued 2004-02) through SAE J1960 at a radiant exposure of 5000 kJ/m² with Xenon irradiance (wavelength 340 nm) of 0.55 W/m² at 70 °C for light cycle and 38°C for dark cycle.

As outlined above, the term "high outdoor UV stability" means that (i) after outdoor stability testing - as described hereinbefore - the yellowness index according to ASTM E313 (test specimens of 1/8 inch thickness) increases by less than 1.5 (measured from the CIE color space values using a D65 light source (observation angle 10°) according to ASTM E1348:2015) and that (ii) before weathering the haze (measured according to ASTM D1003 using CIE illuminant C, test specimens of 1/8 inch thickness) is less than 2%, preferably 1 %.

Accordingly, a further aspect of the invention is the use of a thermoplastic molding composition according to the invention and of shaped articles comprising it for outdoor applications, preferably for applications in the construction and automotive sector, in particular for exterior automotive parts, such as e.g. exterior rear combination lamps.

The invention is further described by the following examples, Figures and patent claims.

### Examples

### Preparation of the thermoplastic resin compositions

A continuous feed of 55 wt.-% (a1) styrene and 45 wt.-% (a2) methyl methacrylate - each based on the total weight of (a1) and (a2) -, a free radical initiator, and antioxidants (0.1 wt.-% Irgafos^{®} 126 and 0.03 wt.-% Irganox^{®} 1076, each based on the entire molding composition) were added to a stirred tank reactor at a temperature of 150 °C. The polymerization reaction was thermally initiated and conducted to a conversion in the range of 60 to 85 %. The copolymer product stream leaving the polymerization reactor was sent to a pre-heater, then to a devolatizer to remove volatile components from the molten polymer. The devolatizer operates at temperatures of from 200 to 245 °C and a pressure less than 20 mbar.

Then, at a temperature of 210 °C the obtained copolymer (a) was compounded in a twin screw extruder with (b2) a low molecular weight hindered amine light stabilizer (Tinuvin^{®} 770, BASF SE), optionally (b1) a high molecular weight hindered amine light stabilizer (Chimassorb^{®} 944,BASF SE), (c) an UV-absorber (Tinuvin^{®} 329, BASF SE) - in the amounts as shown in Table 1 - and an EBS wax (0.05 wt.-%, based on the entire molding composition). The obtained SMMA copolymer molding composition was injection molded into the desired shaped article (test specimens of 1/8 inch (3.175 mm) thickness).

The obtained test specimens were subjected to an (outdoor) UV stability test according to SAE J2527 through SAE J1960 at a radiant exposure of 5000 kJ/m² with Xenon irradiance (wavelength 340 nm) of 0.55 W/m² at 70 °C for light cycle and 38°C for dark cycle. Under these conditions, the CIE L*a*b* color space and yellowness index (YI) calculated from the CIE color space values is measured before (initial) and after (final) exposure, to examine the UV-induced change (Δ YI) in yellowness. The yellowness index (YI) was calculated according to ASTM E313 from the measured CIE color space values using a D65 light source (observation angle of 10°) according to ASTM E1348:2015.

The haze was measured according to ASTM D 1003 using CIE illuminant C.

The experimental results are shown in Table 1.

**Table 1 Color stability test of SMMA copolymer compositions with different combinations of HALS and UV-absorbers**

| | | Comparative Example | | | Example | | | |
|---|---|---|---|---|---|---|---|---|
| | Units | C1 | C2 | C3 | 4 | 5 | 6 | 7 |
| MMA** | wt.-% | 45 | 45 | 45 | 45 | 45 | 45 | 45 |
| HMW-HALS (b1) | ppm | 0 | 0 | 0 | 1500 | 3000 | 3000 | 6000 |
| LMW-HALS (b2) | ppm | 2000 | 4000 | 6000 | 2000 | 2000 | 3000 | 3000 |
| UV-Absorber (c) | ppm | 1000 | 2000 | 3000 | 1000 | 2000 | 3000 | 3000 |
| total "UV-additives" *** | ppm | 3000 | 6000 | 9000 | 4500 | 7000 | 9000 | 12000 |
| Haze | % | 0.4 | 0.5 | 0.5 | 0.8 | 0.8 | 0.7 | 0.7 |
| Initial b* | unitless | 0.16 | 0.25 | 0.28 | 0.33 | 0.39 | 0.40 | 0.62 |
| Final b* | unitless | 1.26 | 1.10 | 1.17 | 1.12 | 1.03 | 0.90 | 1.09 |
| Δ b* | unitless | 1.10 | 0.85 | 0.89 | 0.79 | 0.64 | 0.50 | 0.47 |
| Initial Yl | unitless | 0.29 | 0.44 | 0.49 | 0.75 | 0.73 | 0.74 | 1.15 |
| Final Yl | unitless | 2.29 | 2.02 | 2.16 | 2.09 | 1.91 | 1.67 | 2.04 |
| Δ YI | unitless | 2.00 | 1.58 | 1.67 | 1.34 | 1.18 | 0.93 | 0.89 |

| | | | | | | | | |
|---|---|---|---|---|---|---|---|---|
| ** relates to (a) ***relates to total (b1), (b2) and (c) | | | | | | | | |

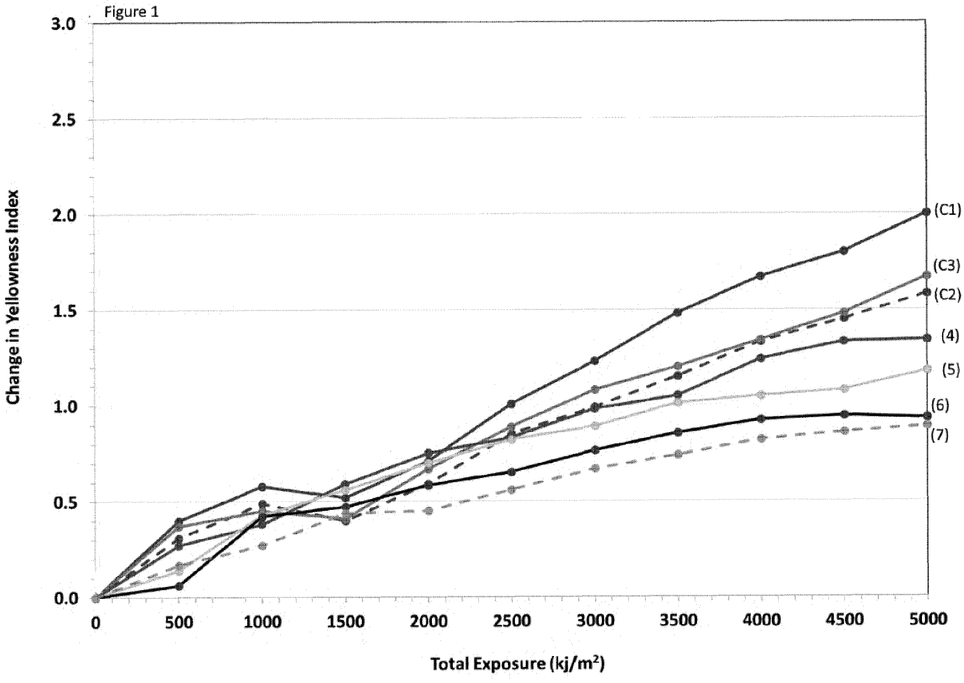

Figure 1 evidences the UV performance of SMMA copolymer compositions with different combinations of HALS and UV-absorbers via SAE 2527 through SAE 1960 (total exposure 5000 kJ/m²). The plot (cp. Figure 1) shows the change in yellowness index (Δ Yl, y-axis) in dependency on the UV-exposure (x-axis) for different formulations (Comparative Examples C1 to C3 and Examples 4 to 7) as shown in Table 1.

In the curve chart shown in Figure 1 the curves obtained for Comparative Examples 1 to 3 are referred to as (C1) to (C3), respectively, and the curves obtained for inventive Examples 4 to 7 are referred to as (4) to (7), respectively.

Table 1 and Figure 1 demonstrate the increased UV resistance and color stability - proven by lower Δ Yl values in the range of 0.89 to 1.34 - of SMMA-copolymer compositions according to inventive Examples 4 to 7 which comprise a combination (b) of a HMW-HALS (b1) and a LMW-HALS (b2) and an UV-absorber (c) in comparison to SMMA-copolymer molding compositions according to Comparative Examples C1 to C3 which only comprise a LMW-HALS (b2) and an UV-absorber (c) for which significantly higher Δ Yl values in the range of 1.58 to 2.00 were evaluated.

Despite the use of much less "UV additives" (relates to total amount of HALS (b) and UV-absorber (c)) than used in the formulation of Comparative Example C2 (6000 ppm), the formulation of Example 4 (4500 ppm) outperformed the formulation of Comparative Example C2 (cp. Table 1, Δ Yl, Δ b* and Figure 1).

Similarly, in the thermoplastic molding composition of Example 6 the same (9000 ppm) and in the composition of Example 5 less (7000 ppm) "UV additives" have been used than in the formulation of Comparative Example 3 (9000 ppm), but both vastly outperformed the formulation of comparative Example 3 (cp. Table 1, Δ Yl, Δ b* and Figure 1).

The thermoplastic molding composition of Example 6 - in comparison to the formulation of comparative Example C3 (only LMW-HALS) - shows in particular the benefit due to the specific combination of HMW-HALS and LMW-HALS as the change in YI and b* (cp. Table 1, Δ Yl, Δ b* and Figure 1) was decreased by 50%.

A further benefit is that the thermoplastic molding compositions according to the invention (Examples 4 to 7) have an increased UV resistance while maintaining good optical properties (cp. Table 1, Haze).

They are advantageously used for the preparation of shaped articles, such as for outdoor applications, preferably for the construction and automotive sector.

## Claims

1. Thermoplastic molding composition comprising (or consisting of) components (a) (b), (c) and optionally (d):
(a) 97 to 99.85 wt.-% of at least one copolymer (a) comprising (or consisting of) repeating units derived from a vinylaromatic monomer (a1), in particular styrene, and methyl methacrylate (a2);
(b) 0.1 to 1.5 wt.-% of a hindered amine light stabilizer (HALS) combination (b) consisting of: (b1) at least one high molecular weight hindered amine light stabilizer (HMW-HALS) having a number average molecular weight (Mn) of ≥ 1800 g/mol, preferably ≥ 1900 g/mol; and (b2) at least one low molecular weight hindered amine light stabilizer (LMW-HALS) having a number average molecular weight of ≤ 800 g/mol;
(c) 0.05 to 1.0 wt.-%, preferably 0.05 to 0.5 wt.-%, more preferably 0.1 to 0.4 wt.-%, most preferred 0.2 to 0.3 wt.-%, of at least one organic UV absorber (c);
(d) optionally up to 0.5 wt.-%, preferably 0.15 to 0.30 wt.-% of at least one further additive (d) different from (b) and (c), provided that pigments and fillers are excluded;
wherein: copolymer (a) comprises from 30 to 60 wt.-% of repeating units derived from methyl methacrylate (a2); the weight ratio (b1):(b2) is 12:1 to 1:2; and
the weight ratio (b):(c) is 5:1 to 1:5.

2. Thermoplastic molding composition according to claim 1 wherein copolymer (a) comprises 30 to 49 wt.-%, preferably 35 to 48 wt.-%, more preferably 40 to 48 wt.-% of repeating units derived from methyl methacrylate (a2).

3. Thermoplastic molding composition according to claim 1 or 2 wherein copolymer (a) consists of 30 to 49 wt.-%, preferably 35 to 48 wt.-%, more preferably 40 to 48 wt.-% of repeating units derived from methyl methacrylate (a2), and 51 to 70 wt.-%, preferably 52 to 65 wt.-%, more preferably 52 to 60 wt.-% of repeating units derived from styrene.

4. Thermoplastic molding composition according to any of claims 1 to 3 wherein the weight ratio of (b1):(b2) is 6:1 to 1.5:2, preferably 4:1 to 1:1, more preferably 3:1 to 1:1.

5. Thermoplastic molding composition according to any of claims 1 to 4 wherein the HMW-HALS (b1) and the LMW-HALS (b2) are based on 2,2,6,6-tetramethyl-piperidine derivatives, in particular derivatives of 2,2,6,6-tetramethyl-4-piperidyl-substituted organic compounds.

6. Thermoplastic molding composition according to any of claims 1 to 5 wherein the HMW-HALS (b1) is at least one compound selected from the group consisting of:
poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]);
1,5,8,12-Tetrakis[4,6-bis(N-butyl-N-1,2,2,6,6-pentamethyl-4-piperidylamino)-1,3,5-triazin-2-yl]-1,5,8,12-tetraazadodecane; N,N'-Bis(2,2,6,6-tetramethyl-4-piperidinyl)-1,6-hexanediamine polymer with 2,4,6-trichloro-1,3,5-triazine reaction products with N-butyl-1-butanamine and N-butyl-2,2,6,6-tetramethyl-4-piperidinamine; 4-Hydroxy-2,2,6,6-tetramethyl-1-piperidinethanol-dimethyl succinate copolymer; Poly[[6-[(1,1, 3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]; and 1,2,3,4-Butanetetracarboxylic acid, polymer with 2,2-bis(hydroxymethyl)-1,3-propanediol and 3-hydroxy-2,2-dimethylpropanal, 1,2,2,6,6-pentamethyl-4-piperidinyl ester, in particular poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]].

7. Thermoplastic molding composition according to any of claims 1 to 6 wherein the LMW-HALS (b2) is at least one compound selected from the group consisting of:
Bis(1-octyloxy-2,2,6,6-tetramethyl-4-piperidyl)sebacate; Bis(1,2,2,6,6-pentamethyl-4-piperidyl) [[3,5-bis(1,1-dimethylethyl)-4 hydroxyphenyl]methyl]butylmalonate;
Bis(2,2,6,6,-tetramethyl-4-piperidyl)sebacate; Methyl 1,2,2,6,6-pentamethyl-4-piperidyl sebacate, Bis(1,2,2,6,6-pentamethyl-4-piperidinyl)-2-(4-methoxy- benzylidene)malonate; N,N'-bisformyl-N,N'-bis-(2,2,6,6-tetramethyl-4-piperidinyl)- hexamethylendiamine; Bis(1,2,2,6,6-pentamethyl-4-piperidinyl)-2-(4-methoxy-benzylidene)malonate; Bis(1,2,2,6,6-pentamethyl-4-piperidyl)sebacate; 2,2,6,6-Tetramethyl-4-piperidinyl stearate; 4-Piperidinol-2,2,6,6-tetramethyl-1-(undecyloxy)-4,4'-carbonate; 2,2,6,6-Tetramethyl-4-piperidinol; 2,2,6,6-Tetramethyl-4-piperidinyl hexadecanoate; 2,2,6,6-Tetramethyl-4-piperidinyl octadecanoate, and mixtures thereof.

8. Thermoplastic molding composition according to any of claims 1 to 7 wherein the LMW-HALS (b2) is a derivative of a bis(2,2,6,6-tetramethyl-4-piperidyl)dicarboxylic acid diester, in particular Bis(2,2,6,6,-tetramethyl-4-piperidyl)sebacate.

9. Thermoplastic molding composition according to any of claims 1 to 8 wherein the UV absorber (c) is at least one compound selected from the group consisting of substituted benzotriazoles, substituted benzophenones, substituted triazines, oxalanilides, substituted resorcinols, salicylates and cyanoacrylates, preferably from the group consisting of 2-(2-hydroxyphenyl) benzotriazoles, 2-hydroxy-benzophenones, hydroxyphenyl-s-triazines and oxalanilides, in particular 2-(2H-benzotriazol-2-yl)-4-(1,1,3,3-tetramethylbutyl)phenol.

10. Thermoplastic molding composition according to any of claims 1 to 9 wherein the weight ratio (b):(c) is 4:1 to 4:3, preferably 3:1 to 4:3.

11. Thermoplastic molding composition according to any of claims 1 to 10 comprising (or consisting of) components (a) (b), (c) and optionally (d) as follows:
(a) 97.80 to 99.85 wt.-%, preferably 98.30 to 99.45 wt.-%, more preferred 98.50 to 99.25 wt.-%;
(b) 0.1 to 1.2 wt.-%, preferably 0.3 to 1.0 wt.-%, more preferred 0.5 to 0.9 wt.-%;
(c) 0.05 to 0.5 wt.-%, preferably 0.1 to 0.4 wt.-%, more preferred 0.1 to 0.3 wt.-%;
(d) optionally up to 0.5 wt.-%, preferably 0.15 to 0.30 wt.-%.

12. A process for the preparation of a thermoplastic molding composition according to any of claims 1 to 11 by mixing copolymer (a) with LMW-HALS (b1), HMW-HALS (b2), UV-stabilizer (c) and, if present, further additives (d).

13. A process for the preparation of a shaped article comprising the thermoplastic molding composition according to any one of claims 1 to 11, wherein the shaped article is formed by extrusion, injection molding, casting, blow molding, spraying, spinning, rolling or weaving, in particular extrusion or injection molding.

14. A shaped article comprising (or consisting of) a thermoplastic molding composition according to claims 1 to 11.

15. Thermoplastic molding composition according to any of claims 1 to 11 or a shaped article according to claim 14 having a high outdoor stability, which is **characterized by**:
(i) an increase of the yellowness index according to ASTM method E313 (test specimens of 1/8 inch thickness) by less than 1.5 (measured from the CIE color space values using a D65 light source (observation angle 10°) according to ASTM E1348:2015) after outdoor stability testing according to SAE J2527 (issued 2004-02) through SAE J1960 at a radiant exposure of 5000 kJ/m² (Xenon irradiance (340 nm) of 0.55 W/m²) and
(ii) before weathering a haze (measured according to ASTM D1003 using CIE illuminant C, test specimens of 1/8 inch thickness) of less than 2%.

16. Use of a thermoplastic molding composition according to any of claims 1 to 11 or 15 or of a shaped article according to claim 14 or 15 for outdoor applications, preferably for applications in the construction and automotive sector.

17. Use of a thermoplastic molding composition according to any of claims 1 to 11 or 15 or of a shaped article according to claim 14 or 15 for exterior automotive parts, such as exterior rear combination lamps.

## Patentansprüche

1. Thermoplastische Formmasse enthaltend (oder bestehend aus) Komponenten (a) (b), (c) und optional (d):
(a) 97 bis 99,85 Gew.-% mindestens eines Copolymers (a), umfassend (oder bestehend aus) Wiederholungseinheiten, die von einem vinylaromatischen Monomer (a1), insbesondere Styrol, und Methylmethacrylat (a2) abgeleitet sind;
(b) 0,1 bis 1,5 Gew.-% einer Kombination aus gehindertem Amin-Lichtstabilisator (HALS) bestehend aus: (b1) mindestens einem gehinderten Amin-Lichtstabilisator mit hohem Molekulargewicht (HMW-HALS) mit einem zahlenmittleren Molekulargewicht (Mn) von ≥ 1800 g/mol, bevorzugt ≥ 1900 g/mol; und (b2) mindestens einem gehinderten Amin-Lichtstabilisator mit niedrigem Molekulargewicht (LMW-HALS) mit einem zahlenmittleren Molekulargewicht von ≤ 800 g/mol;
(c) 0,05 bis 1,0 Gew.-%, bevorzugt 0,05 bis 0,5 Gew.-%, mehr bevorzugt 0,1 bis 0,4 Gew.%, am meisten bevorzugt 0,2 bis 0,3 Gew.-%, mindestens eines organischen UV-Absorbers (c);
(d) optional bis zu 0,5 Gew.-%, bevorzugt 0,15 bis 0,30 Gew.-% mindestens eines weiteren von (b) und (c) verschiedenen Additivs (d), mit der Maßgabe, dass Pigmente und Füllstoffe ausgeschlossen sind;
wobei: das Copolymer (a) 30 bis 60 Gew.-% Wiederholungseinheiten umfasst, die von Methylmethacrylat (a2) abgeleitet sind; das Gewichtsverhältnis (b1):(b2) 12:1 bis 1:2 beträgt; und das Gewichtsverhältnis (b):(c) 5:1 bis 1:5 beträgt.

2. Thermoplastische Formmasse gemäß Anspruch 1, wobei Copolymer (a) 30 bis 49 Gew.-%, bevorzugt 35 bis 48 Gew.-%, mehr bevorzugt 40 bis 48 Gew.-% an Wiederholungseinheiten enthält, die von Methylmethacrylat (a2) abgeleitet sind.

3. Thermoplastische Formmasse gemäß Anspruch 1 oder 2, wobei das Copolymer (a) aus 30 bis 49 Gew.-%, bevorzugt 35 bis 48 Gew.-%, mehr bevorzugt 40 bis 48 Gew.-% an Wiederholungseinheiten, die von Methylmethacrylat (a2) abgeleitet sind, und 51 bis 70 Gew.-%, bevorzugt 52 bis 65 Gew.-%, mehr bevorzugt 52 bis 60 Gew.-% an Wiederholungseinheiten, die von Styrol abgeleitet sind, besteht.

4. Thermoplastische Formmasse gemäß einem beliebigen der Ansprüche 1 bis 3, wobei das Gewichtsverhältnis von (b1):(b2) 6:1 bis 1,5:2, bevorzugt 4:1 bis 1:1, mehr bevorzugt 3:1 bis 1:1 beträgt.

5. Thermoplastische Formmasse gemäß einem beliebigen der Ansprüche 1 bis 4, wobei die HMW-HALS (b1) und die LMW-HALS (b2) auf 2,2,6,6-Tetramethylpiperidin-Derivaten, insbesondere Derivaten von 2,2,6,6-Tetramethyl-4-piperidyl-substituierten organischen Verbindungen basieren.

6. Thermoplastische Formmasse gemäß einem beliebigen der Ansprüche 1 bis 5, wobei das HMW-HALS (b1) mindestens eine Verbindung ist, ausgewählt aus der Gruppe bestehend aus:
Poly[[6-[(1,1,3,3-tetramethylbutyl)amin]-1,3,5-triazin-2,4-diyl][(2,2,6,6-tetramethyl-4-piperidinyl)imin]-1,6-hexandiyl[(2,2,6,6-tetramethyl-4-piperidinyl)imin]]); 1,5,8,12-Tetrakis[4,6-bis(N-butyl-N-1,2,2,6,6-pentamethyl-4-piperidylamin)-1,3,5-triazin-2-yl]-1,5,8,12-tetraazadodecan; N,N'-Bis(2,2,6,6-tetramethyl-4-piperidinyl)-1,6-hexandiaminpolymer mit 2,4,6-trichlor-1,3,5-triazin Reaktionsprodukten mit N-Butyl-1-butanamin und N-Butyl-2,2,6,6-tetramethyl-4-piperidinamin; 4-Hydroxy-2,2,6,6-tetramethyl-1-piperidinethanol-dimethylsuccinatcopolymer; Poly[[6-[(1,1,3,3-tetramethylbutyl)amin]-1,3,5-triazin-2,4-diyl][(2,2,6,6-tetramethyl-4-piperidinyl)imin]-1,6-hexandiyl[(2,2,6,6-tetramethyl-4-piperidinyl)imin]]; und 1,2,3,4-Butantetracarboxylsäure-Polymer mit 2,2-bis(hydroxymethyl)-1,3-propandiol und 3-hydroxy-2,2-dimethylpropanal, 1,2,2,6,6-Pentamethyl-4-piperidinylester, insbesondere Poly[[6-[(1,1,3,3-tetramethylbutyl)amin]-1,3,5-triazin-2,4-diyl][(2,2,6,6-tetramethyl-4-piperidinyl)imin]-1,6-hexandiyl[(2,2,6,6-tetramethyl-4-piperidinyl)imin]].

7. Thermoplastische Formmasse gemäß einem beliebigen der Ansprüche 1 bis 6, wobei das LMW-HALS (b2) mindestens eine Verbindung ist, ausgewählt aus der Gruppe bestehend aus:
Bis(1-octyloxy-2,2,6,6-tetramethyl-4-piperidyl)sebacat; Bis(1,2,2,6,6-pentamethyl-4-piperidyl) [[3,5-bis(1,1-dimethylethyl)-4-hydroxyphenyl]methyl]butylmalonat; Bis(2,2,6,6,-tetramethyl-4-piperidyl)sebacat; Methyl 1,2,2,6,6-pentamethyl-4-piperidyl sebacat, Bis(1,2,2,6,6-pentamethyl-4-piperidinyl)-2-(4-methoxy-benzyliden)malonat; N,N'-Bisformyl-N,N'-bis-(2,2,6,6-tetramethyl-4-piperidinyl)-hexamethylendiamin; Bis(1,2,2,6,6-pentamethyl-4-piperidinyl)-2-(4-methoxy-benzyliden)malonat; Bis(1,2,2,6,6-pentamethyl-4-piperidyl)sebacat; 2,2,6,6-Tetramethyl-4-piperidinylstearat; 4-Piperidinol-2,2,6,6-tetramethyl-1-(undecyloxy)-4,4'-carbonat; 2,2,6,6-Tetramethyl-4-piperidinol; 2,2,6,6-Tetramethyl-4-piperidinylhexadecanoat; 2,2,6,6-Tetramethyl-4-piperidinyl octadecanoat, und Mischungen davon.

8. Thermoplastische Formmasse gemäß einem beliebigen der Ansprüche 1 bis 7, wobei das LMW-HALS (b2) ein Derivat eines Bis(2,2,6,6-tetramethyl-4-piperidyl)dicarbonsäurediesters, insbesondere Bis(2,2,6,6-tetramethyl-4-piperidyl)sebacat, ist.

9. Thermoplastische Formmasse gemäß einem beliebigen der Ansprüche 1 bis 8, wobei der UV-Absorber (c) mindestens eine Verbindung ist ausgewählt aus der Gruppe bestehend aus substituierten Benzotriazolen, substituierten Benzophenonen, substituierten Triazinen, Oxalaniliden, substituierten Resorcinen, Salicylaten und Cyanacrylaten, bevorzugt aus der Gruppe bestehend aus 2-(2-Hydroxyphenyl)benzotriazolen, 2-Hydroxybenzophenonen, Hydroxyphenyl-s-triazinen und Oxalaniliden, insbesondere 2-(2H-Benzotriazol-2-yl)-4-(1,1,3,3-tetramethylbutyl)phenol.

10. Thermoplastische Formmasse gemäß einem beliebigen der Ansprüche 1 bis 9, wobei das Gewichtsverhältnis (b):(c) 4:1 bis 4:3, bevorzugt 3:1 bis 4:3 beträgt.

11. Thermoplastische Formmasse gemäß einem beliebigen der Ansprüche 1 bis 10, umfassend (oder bestehend aus) Komponenten (a), (b), (c) und optional (d) wie folgt:
(a) 97,80 bis 99,85 Gew.-%, bevorzugt 98,30 bis 99,45 Gew.-%, mehr bevorzugt 98,50 bis 99,25 Gew.-%;
(b) 0,1 bis 1,2 Gew.-%, bevorzugt 0,3 bis 1,0 Gew.-%, mehr bevorzugt 0,5 bis 0,9 Gew.-%;
(c) 0,05 bis 0,5 Gew.-%, bevorzugt 0,1 bis 0,4 Gew.-%, mehr bevorzugt 0,1 bis 0,3 Gew.-%;
(d) optional bis zu 0,5 Gew.-%, bevorzugt 0,15 bis 0,30 Gew.-%.

12. Verfahren zur Herstellung einer thermoplastischen Formmasse gemäß einem beliebigen der Ansprüche 1 bis 11 durch Mischen von Copolymer (a) mit LMW-HALS (b1), HMW-HALS (b2), UV-Stabilisator (c) und, sofern vorhanden, weiteren Additiven (d).

13. Verfahren zur Herstellung eines geformten Artikels enthaltend die thermoplastische Formmasse gemäß einem beliebigen der Ansprüche 1 bis 11, wobei der geformte Artikel durch Extrusion, Spritzguss, Gießen, Blasformen, Sprühen, Spinnen, Walzen oder Weben, insbesondere Extrusion oder Spritzguss, geformt wird.

14. Geformter Artikel, umfassend (oder bestehend aus) einer thermoplastischen Formmasse gemäß den Ansprüchen 1 bis 11.

15. Thermoplastische Formmasse gemäß einem beliebigen der Ansprüche 1 bis 11 oder geformter Artikel gemäß Anspruch 14 mit hoher Außenbeständigkeit, **gekennzeichnet durch**:
(i) eine Erhöhung des Vergilbungsindex gemäß ASTM-Methode E313 (Testproben mit einer Dicke von 1/8 Zoll) um weniger als 1,5 (gemessen anhand der CIE-Farbraumwerte unter Verwendung einer D65-Lichtquelle (Beobachtungswinkel 10°) gemäß ASTM E1348:2015) nach Stabilitätsprüfung im Freien gemäß SAE J2527 (herausgegeben 2004-02) durch SAE J1960 bei einer Strahlungseinwirkung von 5000 kJ/m² (Xenon-Bestrahlungsstärke (340 nm) von 0,55 W/m²) und
(ii) vor der Bewitterung eine Trübung (gemessen nach ASTM D1003 unter Verwendung von CIE-Lichtart C, Testproben mit einer Dicke von 1/8 Zoll) von weniger als 2 %.

16. Verwendung einer thermoplastischen Formmasse gemäß einem beliebigen der Ansprüche 1 bis 11 oder 15 oder eines geformten Artikels gemäß Anspruch 14 oder 15 für Außenanwendungen, bevorzugt für Anwendungen im Bau- und Automobilbereich.

17. Verwendung einer thermoplastischen Formmasse gemäß einem beliebigen der Ansprüche 1 bis 11 oder 15 oder eines geformten Artikels gemäß Anspruch 14 oder 15 für Automobilaußenteile, wie Außenheckleuchten.

## Revendications

1. Composition de moulage thermoplastique composée (ou constituée) de composants (a), (b), (c) et éventuellement (d) :
(a) 97 à 99,85 % en poids d'au moins un copolymère (a) composé (ou constitué) de motifs répétitifs issus d'un monomère vinylaromatique (a1), en particulier le styrène, et de méthacrylate de méthyle (a2) ;
(b) 0,1 à 1,5 % en poids d'une combinaison de photostabilisants de type amine encombrée (HALS) (b) constituée de : (b1) au moins un photostabilisant de type amine encombrée à poids moléculaire élevé (HMW-HALS) ayant un poids moléculaire moyen en nombre (Mn) de ≥ 1 800 g/mole, préférablement ≥ 1 900 g/mole ; et (b2) au moins un photostabilisant de type amine encombrée à bas poids moléculaire (LMW-HALS) ayant un poids moléculaire moyen en nombre ≤ 800 g/mole ;
(c) 0,05 à 1,0 % en poids, préférablement 0,05 à 0,5 % en poids, plus préférablement 0,1 à 0,4 % en poids, de la manière la plus préférée 0,2 à 0,3 % en poids, d'au moins un absorbeur d'UV organique (c) ;
(d) éventuellement jusqu'à 0,5 % en poids, préférablement 0,15 à 0,30 % en poids d'au moins un additif supplémentaire (d) différent de (b) et (c), à condition que des pigments et des charges soient exclus ;
le copolymère (a) comprenant 30 à 60 % en poids de motifs répétitifs issus du méthacrylate de méthyle (a2) ; le rapport en poids (b1) : (b2) étant 12 : 1 à 1 : 2 ; et
le rapport en poids (b) : (c) étant 5 : 1 à 1 : 5.

2. Composition de moulage thermoplastique selon la revendication 1, le copolymère (a) comprenant 30 à 49 % en poids, préférablement 35 à 48 % en poids, plus préférablement 40 à 48 % en poids de motifs répétitifs issus du méthacrylate de méthyle (a2).

3. Composition de moulage thermoplastique selon la revendication 1 ou 2, le copolymère (a) étant constitué de 30 à 49 % en poids, préférablement 35 à 48 % en poids, plus préférablement 40 à 48 % en poids de motifs répétitifs issus du méthacrylate de méthyle (a2), et 51 à 70 % en poids, préférablement 52 à 65 % en poids, plus préférablement 52 à 60 % en poids de motifs répétitifs issus du styrène.

4. Composition de moulage thermoplastique selon l'une quelconque des revendications 1 à 3, le rapport en poids (b1) : (b2) étant 6 : 1 à 1,5 : 2, préférablement 4 : 1 à 1 : 1, plus préférablement 3 : 1 à 1 : 1.

5. Composition de moulage thermoplastique selon l'une quelconque des revendications 1 à 4, le HMW-HALS (b1) et le LMW-HALS (b2) étant basés sur des dérivés de 2,2,6,6-tétraméthyl-pipéridine, en particulier des dérivés de composés organiques substitués par 2,2,6,6-tétraméthyl-4-pipéridyle.

6. Composition de moulage thermoplastique selon l'une quelconque des revendications 1 à 5, le HMW-HALS (b1) étant au moins un composé choisi dans le groupe constitué par :
poly[[6-[(1,1,3,3-tétraméthylbutyl)amino]-1,3,5-triazine-2,4-diyl] [(2,2,6,6-tétraméthyl-4-pipéridinyl)imino]-1,6-hexanediyl[(2,2,6,6-tétraméthyl-4-pipéridinyl)imino]]) ; 1,5,8,12-tétrakis[4,6-bis(N-butyl-N-1,2,2,6,6-pentaméthyl-4-pipéridylamino)-1,3,5-triazin-2-yl]-1,5,8,12-tétraazadodécane ; polymère de N,N'-bis(2,2,6,6-tétraméthyl-4-pipéridinyl)-1,6-hexanediamine avec des produits de réaction de la 2,4,6-trichloro-1,3,5-triazine avec la N-butyl-1-butanamine et la N-butyl-2,2,6,6-tétraméthyl-4-pipéridinamine ;
copolymère succinate de de 4-hydroxy-2,2,6,6-tétraméthyl-1-pipéridinéthanol-diméthyle ;
poly[[6-[(1,1,3,3-tétraméthylbutyl)amino]-1,3,5-triazine-2,4-diyl] [(2,2,6,6-tétraméthyl-4-pipéridinyl)imino]-1,6-hexanediyl[(2,2,6,6-tétraméthyl-4-pipéridinyl)imino]] ; et acide 1,2,3,4-butanetétracarboxylique, polymère avec le 2,2-bis(hydroxyméthyl)-1,3-propanediol et le 3-hydroxy-2,2-diméthylpropanal, ester de 1,2,2,6,6-pentaméthyl-4-pipéridinyle, en particulier poly[[6-[(1,1,3,3-tétraméthylbutyl)amino]-1,3,5-triazine-2,4-diyl][(2,2,6,6-tétraméthyl-4-pipéridinyl)imino]-1,6-hexanediyl[(2,2,6,6-tétraméthyl-4-pipéridinyl)imino]].

7. Composition de moulage thermoplastique selon l'une quelconque des revendications 1 à 6, le LMW-HALS (b2) étant au moins un composé choisi dans le groupe constitué par :
sébaçate de bis(1-octyloxy-2,2,6,6-tétraméthyl-4-pipéridinyle) ; [[3,5-bis(1,1-diméthyléthyl)-4-hydroxyphényl]méthyl]butylmalonate de bis(1,2,2,6,6-pentaméthyl-4-pipéridyle) ; sébaçate de bis(2,2,6,6,-tétraméthyl-4-pipéridinyle) ; sébaçate de méthyle et de 1,2,2,6,6-pentaméthyl-4-pipéridinyl, malonate de bis(1,2,2,6,6-pentaméthyl-4-pipéridinyl)-2-(4-méthoxy-benzylidène) ; N,N'-bisformyl-N,N'-bis-(2,2,6,6-tétraméthyl-4-pipéridinyl)-hexaméthylènedamine ; malonate de bis(1,2,2,6,6-pentaméthyl-4-pipéridinyl)-2-(4-méthoxy-benzylidène) ; sébaçate de bis(1,2,2,6,6-pentaméthyl-4-pipéridinyl ; stéarate de 2,2,6,6-tétraméthyl-4-pipéridinyle ; 2,2,6,6-tétraméthyl-1-(undécyloxy)-4,4'-carbonate de 4-pipéridinol ; 2,2,6,6-tétraméthyl-4-pipéridinol ; hexadécanoate de 2,2,6,6-tétraméthyl-4-pipéridinyle ; octadécanoate de 2,2,6,6-tétraméthyl-4-pipéridinyle, et des mélanges correspondants.

8. Composition de moulage thermoplastique selon l'une quelconque des revendications 1 à 7, le LMW-HALS (b2) étant un dérivé de diester d'acide bis(2,2,6,6-tétraméthyl-4-pipéridyl)dicarboxylique, en particulier le sébaçate de bis(2,2,6,6-tétraméthyl-4-pipéridinyle).

9. Composition de moulage thermoplastique selon l'une quelconque des revendications 1 à 8, l'absorbeur d'UV (c) étant au moins un composé choisi dans le groupe constitué par des benzotriazoles substitués, des benzophénones substituées, des triazines substituées, des oxalanilides, des résorcinols substitués, des salicylates et cyanoacrylates, préférablement du groupe constitué par les 2-(2-hydroxyphényl)benzotriazoles, les 2-hydroxybenzophénones, les hydroxyphényl-s-triazines et les oxalanilides, en particulier le 2-(2H-benzotriazol-2-yl)-4-(1,1,3,3-tétraméthylbutyl)phénol.

10. Composition de moulage thermoplastique selon l'une quelconque des revendications 1 à 9, le rapport en poids (b) : (c) étant 4 : 1 à 4 : 3, préférablement 3 : 1 à 4 : 3.

11. Composition de moulage thermoplastique selon l'une quelconque des revendications 1 à 10 composé (ou constitué) de composants (a), (b), (c) et éventuellement (d) comme suit :
(a) 97,80 à 99,85 % en poids, préférablement 98,30 à 99,45 % en poids, de manière plus préférée 98,50 à 99,25 % en poids ;
(b) 0,1 à 1,2 % en poids, préférablement 0,3 à 1,0 % en poids, de manière plus préférée 0,5 à 0,9 % en poids ;
(c) 0,05 à 0,5 % en poids, préférablement 0,1 à 0,4 % en poids, de manière plus préférée 0,1 à 0,3 % en poids ;
(d) éventuellement jusqu'à 0,5 % en poids, préférablement 0,15 à 0,30 % en poids.

12. Procédé pour la préparation d'une composition de moulage thermoplastique selon l'une quelconque des revendications 1 à 11 par mélange d'un copolymère (a) avec LMW-HALS (b1), HMW-HALS (b2), un stabilisant UV (c) et, s'il sont présents, d'autres additifs (d).

13. Procédé pour la préparation d'un article façonné comprenant la composition de moulage thermoplastique selon l'une quelconque des revendications 1 à 11, l'article façonné étant formé par extrusion, moulage par injection, coulée, moulage par soufflage, pulvérisation, centrifugation, roulage ou tissage, en particulier par extrusion ou moulage par injection.

14. Article façonné composé (ou constitué) d'une composition de moulage thermoplastique selon l'une quelconque des revendications 1 à 11.

15. Composition de moulage thermoplastique selon l'une quelconque des revendications 1 à 11 ou article façonné selon la revendication 14 ayant une stabilité à l'extérieur élevée, qui est caractérisé(e) par :
(i) une augmentation de l'indice de couleur jaune selon le procédé de la norme ASTM E313 (éprouvettes de test d'une épaisseur de 1/8 pouce) de moins de 1,5 (mesurée à partir des valeurs d'espace de couleur CIE en utilisant une source de lumière D65 (angle d'observation 10°) selon la norme ASTM E1348:2015) après un test de stabilité à l'extérieur selon la norme SAE J2527 (émise 2004-02) à SAE J1960 à une exposition radiante de 5 000 kJ/m² (irradiance au xénon (340 nm) de 0,55 W/m²) et
(ii) avant exposition aux intempéries un trouble (mesuré selon la norme ASTM D1003 en utilisant l'illuminant C de CIE, des éprouvettes de test d'une épaisseur de 1/8 pouce) inférieur à 2 %.

16. Utilisation d'une composition de moulage thermoplastique selon l'une quelconque des revendications 1 à 11 ou 15 ou d'un article façonné selon la revendication 14 ou 15 pour des applications en extérieur, préférablement pour des applications dans le secteur de la construction et de l'automobile.

17. Utilisation d'une composition de moulage thermoplastique selon l'une quelconque des revendications 1 à 11 ou 15 ou d'un article façonné selon la revendication 14 ou 15 pour des pièces extérieures d'automobile, telles que des feux arrière combinés extérieurs.
